# EUROPÄISCHE PATENTSCHRIFT

(11) **EP 4 018 047 B1**
(45) Veröffentlichungstag und Bekanntmachung des Hinweises auf die Patenterteilung: **03.04.2024**
(21) Anmeldenummer: 21749765.0
(22) Anmeldetag: 07.07.2021
(51) Int. Cl.: E03C 1/04, F16K 11/20, F16K 31/40

(54) **STAGNATIONSSPÜLVENTILVORRICHTUNG**
STAGNATION FLUSHING VALVE DEVICE
ENSEMBLE SOUPAPE DE PURGE D'EAU STAGNANTE

(30) Priorität: 09.07.2020 DE 102020118180
(43) Veröffentlichungstag der Anmeldung: 29.06.2022
(73) Patentinhaber: A. u. K. Müller GmbH & Co. KG, 40595 Düsseldorf (DE)
(72) Erfinder: ARNDT, Wolfgang, 40595 Düsseldorf (DE)
(74) Vertreter: Feder Walter Ebert
(86) Internationale Anmeldenummer: PCT/DE2021/100592
(87) Internationale Veröffentlichungsnummer: WO 2022/008002

(56) Entgegenhaltungen:
- EP-A1- 2 905 519
- IT-A1- MI20 091 421
- US-A1- 2005 274 812
- US-B1- 6 343 389

## Beschreibung

Die Erfindung betrifft eine Ventilvorrichtung zum Einsatz in einer Armatur mit einem in einer Einströmrichtung durchströmbaren Ventileinlauf, einem in einer Ausströmrichtung durchströmbaren Ventilauslauf zur Entnahme von Nutzwasser und einem im Flussweg zwischen dem Ventileinlauf und dem Ventilauslauf angeordneten eigenmediumbetätigbaren Entnahmeventil zur Freigabe des Flusswegs. Eine solche Ventilvorrichtung ist aus der US6343389B1 bekannt. Ferner betrifft die Erfindung eine Armatur mit einer entsprechenden Ventilvorrichtung.

Derartige Ventilvorrichtungen werden zur Steuerung von Fluidströmen häufig im Bereich sanitärer Armaturen, beispielsweise zur Entnahme von Nutzwasser an Waschtischen, eingesetzt, so wie man dies von handelsüblichen Wasserhähnen kennt. Die Ventilvorrichtungen sind üblicherweise innerhalb der Armatur angeordnet, so dass diese von außen nicht ohne weiteres erkennbar sind.

Entsprechende Ventilvorrichtungen weisen in der Regel ein Entnahmeventil auf, welches im Flussweg zwischen dem Ventileinlauf und dem Ventilauslauf angeordnet ist. Wenn das Entnahmeventil geschlossen ist, kann das Wasser dieses nicht passieren und folglich kann dann aus der Armatur auch kein Wasser entnommen werden. Zur Entnahme von Wasser muss das entsprechende Entnahmeventil zunächst geöffnet werden, wodurch dann der Flussweg zwischen dem Ventileinlass und dem Ventilauslass freigegeben wird. Das Wasser strömt dabei aus der Leitung in einer Einströmrichtung in das Ventil ein, passiert das geöffnete Entnahmeventil, durchströmt in einer Ausströmrichtung den Ventilauslauf und wird dann zum Armaturauslass geleitet.

Um die zur Betätigung, also zum Öffnen und Schließen, des Entnahmeventils benötigten Kräfte so gering wie möglich zu halten, ist es ferner bekannt, das Entnahmeventil als eigenmediumbetätigbares Ventil auszugestalten. Bei einem solchen Entnahmeventil sorgt in erster Linie der am Ventileinlass anliegende Wasserdruck sowohl dafür, dass das Ventil in der geschlossenen Stellung gehalten wird als auch dafür, dass sich das Ventil sehr einfach öffnen lässt. Die genauere Funktionsweise eines eigenmediumbetätigbaren Ventils ist bspw. auch in der DE 10 2015 104 258 A1 beschrieben.

Wenn sich das Entnahmeventil im geschlossenen Zustand befindet, steht das Nutzwasser im Grunde unbewegt im Ventileinlass und in der Leitung vor dem Ventil. Dies stellt zwar bei regelmäßiger Entnahme von Wasser kein Problem dar, jedoch kann es bei längerer Nichtöffnung des Entnahmeventils dazu kommen, dass sich bspw. Keime und Ablagerungen im Wasser bilden. Gerade im Bereich von Gasthäusern und Hotels wird das Personal aus diesein Grund oftmals dazu angewiesen, in regelmäßigen Abständen eine Stagnationsspülung in den einzelnen Zimmern durchzuführen. Dabei wird dann das Wasser eine gewisse Zeit ungenutzt, bspw. in ein Waschbecken, in eine Badewanne oder in eine Duschtasse laufen gelassen, um so der Bildung von Keimen und Ablagerungen aufgrund längerer Standzeit entgegenzuwirken. Auch Armaturen, die eine solche Stagnationsspülungen in regelmäßigen Abständen automatisch durchführen, sind bekannt.

Zwar lässt sich die Bildung von Keimen und Ablagerungen durch dieses Vorgehen verhindern, jedoch wird bspw. das Waschbecken bei der Stagnationsspülung jedes Mal auf das Neue nass und muss daher im Anschluss entsprechend gereinigt bzw. getrocknet werden. Diese Reinigung macht die Stagnationsspülung insgesamt aufwendig und zeitintensiv.

Davon ausgehend stellt sich die Erfindung die **Aufgabe**, eine Ventilvorrichtung anzugeben, die eine verbesserte Stagnationsspülung erlaubt.

Diese Aufgabe wird bei einer Ventilvorrichtung der eingangs genannten Art dadurch g e l ö s t, dass ein in einer Spülrichtung durchströmbarer Spülauslauf vorgesehen ist, wobei im Flussweg zwischen dem Ventileinlauf und dem Spülauslauf ein Spülventil zur Freigabe des Flusswegs angeordnet ist.

Durch den Spülauslauf kann das in der Leitung vor dem Ventil stehende Wasser abgeleitet werden und muss dafür nicht durch den Ventilauslauf und dann in das Waschbecken, die Badewanne, die Duschtasse oder Ähnliches fließen. Bei einer Stagnationsspülung kann über das Spülventil der Flussweg vom Ventileinlass zum Spülauslass freigegeben werden, so dass das mitunter mit Keimen oder Ablagerungen belastete Wasser nicht durch den Ventilauslass, sondern durch den Spülauslauf abfließen kann. Aufgrund des Spülauslaufs weist das Ventil somit neben dem normalen Ventilauslauf einen zweiten zusätzlichen Auslauf auf, der nur für eine Stagnationsspülung verwendet wird. Im normalen Betrieb, also bei der Entnahme von Nutzwasser über den Ventilauslass, wird der Spülauslauf nicht benötigt und das Stagnationsventil kann dementsprechend geschlossen sein. Eine zusätzliche Reinigung, bspw. von Waschbecken oder Badewanne, nach der Stagnationsspülung ist somit nicht erforderlich und die Stagnationsspülung insgesamt verbessert.

In Weiterbildung der Ventilvorrichtung hat es sich als vorteilhaft herausgestellt, wenn die Ventilvorrichtung ein Ventilgehäuse umfasst und das Ventilgehäuse den Ventileinlauf und den Ventilauslauf aufweist. Über das Ventilgehäuse lässt sich die Ventilvorrichtung insoweit einfach handhaben und auch einfach positionieren und montieren. Das Ventilgehäuse ist insofern vorteilhaft einstückig ausgestaltet. Bei dem Ventilgehäuse kann es sich aufgrund der einstückigen Ausgestaltung um ein vorgefertigtes und nach Art eines Grundelements ausgestaltetes Bauteil handeln, welches in einem vorgelagerten Arbeitsschritt hergestellt wurde. Das Ventilgehäuse kann insofern als Modulbaugruppe ausgestaltet sein und die übrigen Komponenten können bei der Montage der Ventilvorrichtung an dem Ventilgehäuse angeordnet werden. Der Ventileinlauf und der Ventilauslauf können fest und einstückig miteinander verbunden sein.

Dahingehend hat es sich in Weiterbildung der Erfindung ferner als vorteilhaft herausgestellt, wenn das Ventilgehäuse ebenfalls den Spülauslauf aufweist. Auch der Spülauslauf kann insofern fest und einstückig mit dem Ventileinlauf und dem Ventilauslauf über das Ventilgehäuse verbunden sein, was entsprechend die Handhabbarkeit des Ventils noch mehr vereinfacht.

Im Hinblick auf das Entnahmeventil und das Spülventil hat es sich als vorteilhaft herausgestellt, wenn das Ventilgehäuse einen ersten Ventilsitz für das Entnahmeventil und einen zweiten Ventilsitz für das Spülventil aufweist. Durch die Anordnung der Ventilsitze am Ventilgehäuse müssen die Ventile selbst keine entsprechenden Ventilsitze aufweisen. Dies führt nicht nur dazu, dass die Ventile sehr flachbauend ausgestaltet sein können, sondern führt insgesamt zu einer geringen Baugröße der Ventilvorrichtung. Die Ventilsitze können kreisförmig ausgestaltet sein, was dafür sorgt, dass ein großer Wasserstrom das entsprechende Ventil im geöffneten Zustand passieren kann, gleichzeitig kann durch die kreisförmige Ausgestaltung aber auch eine zuverlässige Abdichtung erreicht werden, wenn die Ventile geschlossen sind. Im Hinblick auf die Anordnung der beiden Ventilsitze hat es sich als vorteilhaft herausgestellt, wenn diese konzentrisch zueinander angeordnet sind. Die Ventilsitze können insofern beide kreisförmig ausgestaltet sein und die entsprechenden Kreise können auf einer gemeinsamen Achse liegen. Vorteilhaft ist es, wenn das Spülventil den Ventileinlauf mit dem Spülauslauf und das Entnahmeventil den Ventileinlauf mit dem Ventilauslauf verbindet.

Gemäß einer vorteilhaften Ausgestaltung kann der Ventilauslauf einen Strahlregler aufweisen. Unter einem Strahlregler wird eine Düse verstanden, welche einen Wasserstrahl vereinheitlicht, verlangsamt und/oder verbreitert und dazu in der Regel dem Wasserstrahl Luft beimischt. Entsprechende Strahlregler werden insofern auch als Luftsprudler bezeichnet. Bei dieser Ausgestaltung kann der Ventilauslauf eine Umlenkung, insbesondere eine 90°-Umlenkung, aufweisen, und der Strahlregler kann insofern winklig zum Ventilauslauf angeordnet sein. Das Nutzwasser kann in Einströmrichtung in das Ventil hineinströmen, durch das Entnahmeventil in Ausströmrichtung in den Ventilauslauf und dann durch die Umlenkung in den Strahlregler strömen und von dort aus beispielsweise in ein Waschbecken fließen.

Hinsichtlich der Ausgestaltung von Ventileinlauf, Ventilauslauf und Spülauslauf hat es sich als vorteilhaft erwiesen, wenn diese jeweils rohrförmig ausgestaltet sind. Eine entsprechende rohrförmige Ausgestaltung ermöglicht einen gleichmäßigen Durchfluss und hat zudem auch hinsichtlich der Fertigung Vorteile.

Weiterhin wird vorgeschlagen, dass der Ventileinlauf und/oder der Ventilauslauf und/oder der Spülauslauf einen Leitungsanschluss zum Anschluss an eine Fluidleitung aufweisen. Über entsprechende Leitungsanschlüsse lassen sich die jeweiligen Ein- bzw. Ausläufe sehr einfach mit entsprechenden Leitungen verbinden. Die Verbindung kann lösbar sein, so dass die entsprechenden Leitungen in die entsprechenden Leitungsanschlüsse eingesteckt werden können. Dies ist insbesondere bei der Montage der Ventilvorrichtung vorteilhaft. Die Leitungsanschlüsse können in die jeweiligen Ein- und/oder Ausläufe eingeschraubt oder auch einstückig mit diesen verbunden sein. Wenn die Leitungsanschlüsse eingeschraubt sind, kann eine Dichtung vorgesehen sein, die den unbeabsichtigten Austritt von Wasser verhindert.

In Weiterbildung des Spülventils hat es sich als vorteilhaft herausgestellt, wenn dieses als eigenmediumbetätigbares Ventil ausgestaltet ist. Durch diese Ausgestaltung kann die zur Betätigung des Spülventils benötigte Kraft vergleichsweise geringgehalten werden, und das Spülventil kann mit geringem Kraftaufwand sowohl geöffnet als auch geschlossen werden.

In einer alternativen Ausgestaltung kann das Spülventil jedoch auch nicht als eigenmediumbetätigbares Ventil, sondern bspw. als Hebel- oder Kugelventil ausgestaltet sein. Entsprechende Ventile weisen meist einen geringeren Bauraum auf und sind in konstruktiver Hinsicht deutlich einfacher ausgestaltet als eigenmediumbetätigbare Ventile. Weiterhin ist die bei einer Stagnationsspülung abzuführende Wassermenge in der Regel ohnehin vergleichsweise gering und das Spülventil wird im Gegensatz zu dem Entnahmeventil in der Praxis auch deutlich seltener betätigt.

Im Hinblick auf die Montage hat es sich als vorteilhaft herausgestellt, wenn das Entnahmeventil und das Spülventil lösbar mit dem Ventilgehäuse verbunden sind. Bei der Montage der Ventilvorrichtung können beispielsweise das Entnahmeventil und das Spülventil über eine Steckverbindung oder über eine Schraubverbindung mit dem Ventilgehäuse auf sehr einfache Weise verbunden werden. Das Ventilgehäuse kann insofern den Grundkörper der Ventilvorrichtung bilden, und das Spülventil und das Entnahmeventil können dann mit dem Ventilgehäuse verbunden werden. Das Ventilgehäuse kann eine Steckkontur aufweisen, auf die die Ventile vorteilhaft in nur einer Ausrichtung aufgesteckt werden können. Dies vereinfacht die Positionierung und die Verbindung der Ventile mit dem Ventilgehäuse.

Weiter hat es sich als vorteilhaft herausgestellt, wenn das Entnahmeventil und das Spülventil unabhängig voneinander betätigbar sind. Dies ermöglicht eine variable Steuerung der Ventilvorrichtung bzw. der Flusswege. In der Praxis hat es sich jedoch als vorteilhaft herausgestellt, wenn die Ventilvorrichtung nur drei verschiedene Schaltzustände bzw. Stellungen einnehmen kann, nämlich einmal eine geschlossene Stellung, in welcher die Ventilvorrichtung kein Wasser passieren lässt, sowie eine Stagnationsstellung für eine Stagnationsspülung und eine Entnahmestellung zur Entnahme von Nutzwasser. Zur Entnahme von Nutzwasser kann das Entnahmeventil geöffnet und das Spülventil geschlossen sein. Zur Stagnationsspülung kann das Entnahmeventil geschlossen und das Spülventil geöffnet sein. Insofern kann beispielsweise vorgesehen sein, dass das Entnahmeventil nicht geöffnet werden kann, wenn das Spülventil geöffnet ist, so dass die Stagnationsspülung vor der Entnahme von Nutzwasser zunächst beendet werden muss und das Spülventil entsprechend geschlossen werden muss, bis das Entnahmeventil dann geöffnet werden kann. Um das Wasser gänzlich abzusperren, können sowohl das Entnahmeventil als auch das Spülventil geschlossen sein.

Das Entnahmeventil und das Spülventil können aktiv ansteuerbar sein und somit die jeweiligen Flusswege wahlweise freigeben. Es handelt sich somit bei beiden Ventilen nicht um selbstöffnende Ventile, die beispielsweise zur Druckentlastung eingesetzt werden.

Zur Betätigung der Ventile hat es sich als vorteilhaft herausgestellt, wenn das Entnahmeventil und/oder das Spülventil über eine Magnetbetätigung betätigbar sind. Dies bietet nicht nur Vorteile hinsichtlich einer präzisen Ansteuerung, sondern vereinfacht auch die Dichtung, da über eine Magnetbetätigung die Ventile berührungslos betätigt bewegt werden können. Bei der Magnetbetätigung kann es sich um eine elektromagnetische Betätigung, insbesondere eine Spulenansteuerung, handeln.

Zur Betätigung bzw. Ansteuerung des Entnahmeventils und/oder des Spülventils hat es sich als vorteilhaft erwiesen, wenn die Ventile eine Steuereinheit aufweisen. Über die Steuereinheit können die jeweiligen Ventile zuverlässig zwischen der geschlossenen Stellung und der offenen Stellung hin und her geschaltet werden. Die Steuereinheit kann bistabil oder monostabil ausgestaltet sein. Insbesondere für das Spülventil bietet sich beispielsweise eine monostabile Steuereinheit an, da ein Spülvorgang in der Regel nur wenige Sekunden dauert. Weiterhin ist es von außen nicht ohne weiteres erkennbar, ob gerade eine Stagnationsspülung durchgeführt wird, da das Wasser bei dieser Spülung nur innerhalb des geschlossenen Leitungssystems fließt. Es könnte somit unter Umständen vorkommen, dass eine Stagnationsspülung begonnen, jedoch nicht beendet wird und dann insoweit unbeabsichtigt Wasser verschwendet wird. Mit einem monostabilen Spülventil könnte dies verhindert werden, da ein entsprechendes Ventil den Flussweg nur für die Dauer einer Betätigung freigibt und dann selbstständig wieder in die geschlossene Stellung übergeht. Vorteilhaft ist es insofern, wenn das Spülventil in die geschlossene Stellung vorgespannt ist.

Die Bedienung der Steuereinheit kann rein manuell per Hand, bspw. über einen Knopf, einen Schalter, einen Hebel, ein Rad oder Ähnliches, erfolgen. Gleichwohl ist es jedoch auch möglich, die Steuereinheit bzw. die Steuereinheiten über eine Funk- oder über eine Kabelverbindung auf elektrischem Wege anzusteuern und die Ventile so zu öffnen bzw. zu schließen. Auch eine berührungslose Betätigung ist möglich. Weiterhin kann auch vorgesehen sein, dass das Spülventil in vorgegebenen Zeitabständen regelmäßig geöffnet wird, um regelmäßig eine Stagnationsspülung durchzuführen. Zur entsprechenden Steuerung kann eine programmierbare Recheneinheit vorgesehen sein.

Im Hinblick auf die Steuereinheiten hat es sich weiterhin als vorteilhaft herausgestellt, wenn diese jeweils eine Steuerspule aufweisen. Über eine Steuerspule lassen sich die Pilotventilschließelemente sehr präzise bewegen und es ist kein direkter Kontakt erforderlich, da die Spulen die Schließelemente magnetisch bewegen können.

Im Hinblick auf die Ausgestaltung des Entnahmeventils und des Spülventils hat es sich als vorteilhaft herausgestellt, wenn diese als Membranventile ausgestaltet sind. Die Ventile können eine gegenüber dem jeweiligen Ventilsitz bewegbare Membrane und eine in Flussrichtung hinter der Membrane angeordnete Druckkammer verfügen. In der Druckkammer kann der am Ventileinlauf anliegende Druck anliegen, der größer sein kann als der Druck im Ventilauslauf bzw. im Spülauslauf. Durch diesen Druck bzw. die Druckdifferenz kann somit die Membrane auf den Ventilsitz gedrückt werden, da die Druckkammer auf der dem Ventilsitz gegenüberliegen Seite der Membrane angeordnet sein kann. Damit das Wasser vom Ventileinlauf in die jeweiligen Druckkammern fließen kann, weisen die Membranen entsprechende Verbindungskanäle auf, die insbesondere im seitlichen Bereich der Membranen angeordnet sind. In der jeweiligen geschlossenen Stellung der Ventile kann die Membrane auf dem jeweiligen Ventilsitz aufliegen und so den Ventileinlauf gegenüber dem Ventilauslauf bzw. gegenüber dem Spülauslauf zuverlässig abdichten.

Das Entnahmeventil kann insofern ein gegenüber einem Ventilsitz bewegbares Schließelement, insbesondere eine Membrane, und einen auf der dem Ventilsitz gegenüberliegenden Seite des Schließelements angeordnete Druckkammer aufweisen, so dass das Schließelement durch den Druck in der Druckkammer auf den Ventilsitz gedrückt werden kann. Das Spülventil kann entsprechend ausgestaltet sein. Zur Bewegung des Schließelements des Entnahmeventils kann ein Pilotventil vorgesehen sein. Das Spülventil kann entsprechend ausgestaltet sein. Das jeweilige Pilotventil kann mit dem Entnahmeventil bzw. mit dem Spülventil derart gekoppelt, insbesondere fluidgekoppelt, sein, dass durch das jeweilige Pilotventil das Schließelement des Entnahmeventils bzw. des Spülventils bewegt und das jeweilige Ventil so geöffnet und geschlossen werden kann.

Zur Befestigung der Membrane hat es sich als vorteilhaft herausgestellt, wenn das Ventilgehäuse für jede Membrane eine nutenförmige Membranaufnahme aufweist, in der die jeweilige Membrane aufgenommen sein kann. Über diese Membranaufnahme kann somit die Membran fixiert werden, was eine zuverlässige Öffnung und Schließung des jeweiligen Ventils erlaubt.

Weiterhin hat es sich als vorteilhaft herausgestellt, wenn das Entnahmeventil und/oder das Spülventil einen Ventildeckel aufweisen und die jeweilige Membrane zwischen dem Ventildeckel und dem Ventilgehäuse eingespannt ist. Somit kann ein sicherer Halt der Membrane gewährleistet werden. Ferner kann die Membrane auch leicht ausgetauscht oder repariert werden. Denn wenn ein Ventildeckel vom Ventilgehäuse gelöst wird, kann die entsprechende Membrane unmittelbar zugänglich sein. Die Ventildeckel können Verbindungspunkte zur Verbindung mit dem Ventilgehäuse aufweisen, bspw. in Form von Bohrungen, die für eine Schraubverbindung geeignet sind. Zur Befestigung der Membrane an dem Ventildeckel, kann auch diese eine, insbesondere kreisförmig umlaufende, Nut aufweisen. Die Membrane kann somit im Randbereich sowohl in der Nut des Ventildeckels als auch in der Nut bzw. der Membranaufnahme des Ventilgehäuses gelagert bzw. eingespannt sein. Aufgrund der kreisförmigen Ausgestaltung der Nuten, kann die Membrane umfangsseitig eingespannt sein, was für eine zuverlässige Verschließung des jeweiligen Ventilsitzes sorgt. Die eingespannte Membrane kann sich aufgrund ihrer Flexibilität somit dann nur noch senkrecht zum Ventilsitz bewegen und bspw. nicht seitlich gegenüber diesem verrutschen.

Weiterhin hat es sich als vorteilhat herausgestellt, wenn der Randbereich der Membrane als Dichtbereich ausgestaltet ist. Dadurch, dass der Randbereich als Dichtbereich ausgestaltet und sich in Ausnehmungen in dem Ventilgehäuse und dem Ventil bzw. des Ventildeckels erstrecken kann, kann verhindert werden, dass Flüssigkeit zwischen Ventildeckel und Ventilgehäuse nach draußen dringt. Es ist insoweit vorteilhaft, wenn der Randbereich der Membrane größer ist als die beiden Ausnehmungen, so dass der Randbereich der Membrane bei der Verbindung der Ventile mit dem Ventilgehäuse zumindest geringfügig verformt wird. Dadurch ergibt sich eine gute Dichtwirkung. Der Dichtbereich der Membrane kann sich in Bezug zum Schließbereich der Membrane senkrecht, insbesondere nach oben und nach unten, gegenüber einem mittleren Bereich der Membrane erstrecken. Der Dichtbereich kann als Dichtlippe ausgestaltet sein. Ventildeckel und Ventilgehäuse können den Randbereich der Membrane formschlüssig umgreifen. Der Randbereich der Membrane kann in radialer Richtung sowohl gegenüber dem Ventilgehäuse als auch gegenüber dem Ventildeckel dichten. Durch eine solche radiale Dichtung brauchen die Ventildeckel in axialer Richtung nur mit geringer Kraft auf die Ventilgehäuse aufgepresst werden, so dass sich eine mechanische Bauteilentlastung ergibt.

Im Hinblick auf die Positionierung der Druckkammer hat es sich als vorteilhaft erwiesen, wenn dieser zwischen der Membrane und dem Ventildeckel angeordnet ist. Der Ventildeckel kann zumindest bereichsweise topfförmig ausgestaltet sein und die Membrane kann diesen topfförmigen Bereich überspannen. Die Druckkammer kann dann insofern an einer Seite von der Membrane und an den übrigen Seiten von dem Ventildeckel begrenzt werden. Wenn das jeweilige Ventil geöffnet wird, kann sich die Membrane in die Druckkammer hineinbewegen. Diese Bewegung kann von der Größe der Druckkammer bzw. von der Ausgestaltung des Ventildeckels begrenzt werden. Weiterhin ermöglicht das Ventil eine fest definierte Wasserwegeführung. Die Druckkammer kann insofern derart ausgestaltet sein, dass sich keine bzw. nur geringe Totzonen bilden und die Ventile beim Durchströmen auch durchgespült werden. Es kann sich kein Wasser im Ventil sammeln und aufstauen, wodurch sich hygienische Vorteile ergeben.

Ferner hat es sich als vorteilhaft heraufgestellt, wenn die Druckkammer des Entnahmeventils über einen Vorsteuerkanal mit dem Ventilauslass und die Druckkammer des Spülventils über einen Vorsteuerkanal mit dem Spülauslass verbunden ist. Über die jeweiligen Vorsteuerkanäle kann das sich in der Druckkammer befindliche Wasser in den jeweiligen Auslauf fließen, wodurch der Druck in der Druckkammer sinkt und sich die Membrane dann selbstständig vom jeweiligen Ventilsitz abhebt. Die Vorsteuerkanäle können in dem Ventilgehäuse angeordnet und nach Art von Bohrungen ausgestaltet sein. Die Vorsteuerkanäle können sich senkrecht zu dem Ventilauslauss bzw. zu dem Spülauslass und insofern parallel zur Bewegungsrichtung der Membranen erstrecken.

Weiterhin hat es sich als vorteilhaft herausgestellt, wenn das Entnahmeventil und das Spülventil jeweils ein Pilotventil zum wahlweisen Öffnen des jeweiligen Vorsteuerkanals aufweisen. Wenn der Vorsteuerkanal geschlossen ist, kann das Wasser nicht aus der Druckkammer abfließen, sondern dieses drückt dann die jeweilige Membrane auf den Ventilsitz. Beim Öffnen des Pilotventils kann der jeweilige Vorsteuerkanal freigegeben werden, so dass das Wasser aus der Druckkammer durch den Vorsteuerkanal in den jeweiligen Auslauf fließen kann. Der Druck im Druckraum nimmt dabei ab, so dass die Membrane vom Ventilsitz abgehoben und das jeweilige Ventil so entsprechend über das Pilotventil geöffnet werden kann. Die Pilotventile dienen insofern als Vorsteuerventile und bedürfen zur Betätigung deutlich geringerer Betätigungskräfte, als dies bei einer direkten Betätigung des Entnahmeventils bzw. des Spülventils der Fall wäre. Insofern genügt es, wenn sich die Pilotventile über die jeweiligen Steuereinheiten ansteuern lassen. Die vorstehend im Hinblick auf die Ventile allgemein beschriebene Betätigung und Ansteuerung gilt somit entsprechend auch für die Pilotventile der jeweiligen Ventile.

Erfindungsgemäß sind die Einströmrichtung und die Spülrichtung einander entgegengesetzt angeordnet.

Das Wasser wird somit bei der Stagnationsspülung im Ventil umgelenkt und strömt dann entgegen der Einströmrichtung in Spülrichtung wieder aus dem Ventil hinaus. Der Ventileinlauf kann mit einer Wasserleitung eines Wasserversorgungssystems verbunden sein und der Spülauslauf kann mit einer Leitung eines Abwassersystems verbunden sein. Da entsprechende Systeme oft weitestgehend parallel geführt sind, kann so durch die Umlenkung im Ventil bei einer Stagnationsspülung das Wasser vom Versorgungssystem ins Abwassersystem umgelenkt werden.

Im Hinblick auf die Einströmrichtung und die Ausströmrichtung hat es sich als vorteilhaft erwiesen, wenn diese parallel zueinander angeordnet sind. Wenn somit das Entnahmeventil geöffnet ist, kann das Wasser in Einströmrichtung einströmen und dann durch das Entnahmeventil in Ausströmrichtung wieder aus dem Ventil hinausströmen. Die Einströmrichtung und die Ausströmrichtung definieren somit die Hauptdurchströmungsrichtung des Wassers. Vorteilhaft ist es, wenn das Wasser die Ventilvorrichtung im Wesentlichen in axialer Richtung durchströmt. Im Hinblick auf die verschiedenen Strömungsrichtungen hat es sich ferner als vorteilhaft herausgestellt, wenn die Spülrichtung und die Ausströmrichtung einander entgegengesetzt angeordnet sind.

Weiterhin hat es sich als vorteilhaft herausgestellt, wenn der Ventileinlauf und der Ventilauslauf auf gegenüberliegenden Seiten angeordnet sind. Diese Ausgestaltung ermöglicht insofern, dass das Wasser auf einer Seite in die Ventilvorrichtung einströmen und dann auf der anderen Seite wieder aus der Ventilvorrichtung ausströmen und dort als Nutzwasser verwendet werden. Der Spülauslauf kann auf derselben Seite wie der Ventileinlauf angeordnet sein, so dass das Wasser entsprechend auf derselben Seite bei einer Stagnationsspülung wieder aus dem Ventil hinausströmt.

Ferner hat es sich als vorteilhaft herausgestellt, wenn eine parallel zu der Einströmrichtung und/oder zu der Ausströmrichtung angeordnete Hauptventilachse vorgesehen ist, wobei sich das Entnahmeventil und das Spülventil in Bezug zu der Hauptventilachse gegenüberliegen. Dadurch, dass sich Spülventil und das Entnahmeventil gegenüberliegen, kann die Ventilvorrichtung sehr kompakter ausgestaltet sein und ein geringes Bauvolumen aufweisen. Weiterhin kann durch diese Ausgestaltung auch eine gleichmäßige Gewichtsverteilung erreicht werden.

Es hat sich im Hinblick auf die beiden Ventile, also das Entnahmeventil und das Spülventil, als vorteilhaft herausgestellt, wenn diese, zumindest im Wesentlichen, identisch ausgestaltet sind. Dadurch lässt sich die Komplexität der Ventilvorrichtung reduzieren. Spülventil und Entnahmeventil können insofern Ventile derselben Baugruppe sein. Ob das entsprechende Ventil als Entnahmeventil oder als Spülventil fungiert, hängt insofern nicht von der Ausgestaltung des Ventils an sich ab, sondern davon, an welcher Stelle dieses mit dem Ventilgehäuse verbunden ist. Wenn das Ventil den Ventileinlauf und den Ventilauslauf miteinander verbindet, handelt es sich im ein Entnahmeventil, und wenn das Ventil den Ventileinlauf und den Spülauslauf miteinander verbindet, handelt es sich um ein Spülventil.

Weiterhin hat es sich im Hinblick auf die Kompaktheit der Ventilvorrichtung als vorteilhaft herausgestellt, wenn sich die Steuervorrichtungen parallel zur Hauptventilachse erstrecken. Die Steuervorrichtungen können somit sehr nah an das Ventilgehäuse herangebracht werden und beispielsweise auf gegenüberliegenden Seiten der Hauptventilachse bzw. des Ventilauslaufs angeordnet sein. Vorteilhaft ist es, wenn die Steuervorrichtungen, insbesondere unmittelbar, an das Ventilgehäuse angrenzen. Senkrecht zur Hauptventilachse kann die Ventilvorrichtung daher relativ flachbauend sein, was in vielen Einbausituationen vorteilhaft ist. Die Spulen der Steuervorrichtungen können sich insofern parallel zur Hauptventilachse erstrecken.

Im Hinblick auf die Membranen des Entnahmeventils und des Spülventils hat es sich als vorteilhaft herausgestellt, wenn sich diese beim Öffnen des jeweiligen Ventils und beim Schließen des jeweiligen Ventils gegenläufig zueinander bewegen. Dies geht damit einher, dass die beiden Ventile auf gegenüberliegenden Seiten des Ventilgehäuses angeordnet sind. Würde man beispielsweise die Membran des Entnahmeventils und die Membran des Spülventils beide von der geschlossenen Stellung in die offene Stellung bewegen, so würden sich die bewegbaren mittleren Bereiche der Membranen entsprechend voneinander wegbewegen. Beim Schließen können sich die mittleren Bereiche der Membranen entsprechend aufeinander zu bewegen.

Ferner kann sich die Membran bzw. können sich die Membranen des Entnahmeventils und/oder des Spülventils beim Öffnen und beim Schließen senkrecht zur Hauptventilachse bewegen. Die Membranen können sich entsprechend in einer Hauptschaltachse bewegen, die senkrecht zur Hauptventilachse angeordnet ist.

Im Hinblick auf die jeweiligen Pilotventile hat es sich als vorteilhaft herausgestellt, wenn diese jeweils ein Pilotventilschließelement aufweisen, das parallel zur Hauptventilachse bewegbar ist. Auch diese Ausgestaltung trägt zu einer kompakten Bauweise des Ventils bei. Die Pilotventile können mit den Ventildeckeln der jeweiligen Ventile verbunden sein, so dass die Ventile insofern als Baueinheiten ausgestaltet sein können. Die Steuereinheiten können fest oder lösbar mit den übrigen Komponenten der Pilotventile verbunden sein. Bei der Bewegung der Pilotventilschließelemente können diese in die Spule der Steuervorrichtung hinein oder aus der Steuervorrichtung hinausbewegt werden. Vorteilhaft ist es weiterhin, wenn das Verdrängervolumen der Membrane größer ist als das Vorsteuervolumen des jeweiligen Pilotventils. Hierdurch lässt sich erreichen, dass bei jedem Öffnungsvorgang auch das Pilotventil komplett durchspült wird und insofern die Gefahr der Bildung von Stagnationswasser verringert wird. Ein entsprechendes Ventil ist auch in der EP 3 070 383 A1 beschrieben, deren Offenbarungsgehalt durch Verweis vollumfänglich mit aufgenommen wird. Die Pilotventilsitze, auf denen die Pilotventilschließelemente in der geschlossenen Stellung aufliegen bzw. aufsitzen, können am jeweiligen Ventil oder auch am gemeinsamen Ventilgehäuse angeordnet sein. Die Pilotventilsitze können die Enden der Vorsteuerkanäle bilden, so dass über die Pilotventilschließelemente die Vorsteuerkanäle zuverlässig geschlossen werden können.

Ausgestaltungen und Merkmale der Ventilvorrichtung, die im Rahmen dieser Anmeldung entweder ausschließlich im Hinblick auf das Entnahmeventil oder ausschließlich im Hinblick auf das Spülventil oder ausschließlich in Kombination sowohl für das Entnahmeventil als auch das Spülventil beschrieben wurden, können entsprechend auch jeweils bei dem anderen Ventil sowie bei nur einem der beiden Ventile vorgesehen sein. Insofern kann bspw. das Entnahmeventil eines oder mehrere der vorstehend beschriebenen Merkmale aufweisen und das Spülventil kann sowohl dieselben, aber auch andere der vorstehend beschriebenen Merkmale aufweisen.

Im Hinblick auf die eingangs genannte Aufgabe wird ferner eine Armatur, insbesondere eine Waschtischarmatur, vorgeschlagen, die eine Ventilvorrichtung in der vorstehend beschriebenen Ausgestaltung aufweist. Es ergeben sich die im Hinblick auf die Ventilvorrichtung bereits beschriebenen Vorteile.

Die Armatur kann einen Armaturkörper und einen sich insbesondere winklig zum Armaturkörper angeordneten Armaturarm aufweisen, wobei der Armaturarm einen Armaturauslass aufweisen kann, aus dem Nutzwasser herausströmen kann. Auch können Armaturkörper und Armaturarm einstückig miteinander verbunden sein. Die Ventilvorrichtung kann im Armaturkörper angeordnet und somit von außen nicht sichtbar sein. Aufgrund der kompakten Ausgestaltung der Ventilvorrichtung findet diese auch in schmalen Ventilkörpern Platz. Die Einströmrichtung kann sich parallel zur Längsachse des Ventilkörpers erstrecken, so dass das Wasser von unten, beispielsweise durch einen Montagebereich des Ventilkörpers, in den Ventileinlauf der Ventilvorrichtung einströmen kann. Auch die Spülrichtung kann sich dementsprechend parallel zur Längsachse des Ventilkörpers erstrecken, so dass das Wasser nach unten aus dem Ventilkörper durch den Montagebereich austreten kann.

Die Ventilvorrichtung kann insoweit in vorteilhafter Weise derart angeordnet sein, dass die Hauptventilachse parallel zur Hauptströmungsrichtung des Fluids im Armaturkörper ausgerichtet ist.

In einer alternativen Ausgestaltung kann die Ventilvorrichtung im Armaturarm angeordnet sein. Aufgrund der kompakten Bauweise der Ventilvorrichtung kann diese somit sehr nah am Armaturauslass positioniert werden, so dass bei einer Stagnationsspülung die Leitung möglichst bis zum Armaturauslass gespült wird. Dies geht damit einher, dass der Bereich zwischen Ventilvorrichtung bzw. zwischen Spülventil und Armaturauslass bei einer Stagnationsspülung nicht durchspült wird. Durch die Positionierung des Ventils im Armaturarm kann dieser Abstand sehr klein gehalten werden. Es kann zudem vorgesehen sein, dass der Ventilauslass einstückig mit dem Armaturauslass verbunden ist bzw. dass der Ventilauslass als Armaturauslass ausgestaltet ist. Der Ventilauslass kann insofern eine Abwinkelung aufweisen, so dass das Nutzwasser nach unten aus dem Ventilauslass herausströmen kann.

Weiterhin hat es sich als vorteilhaft herausgestellt, wenn der Armaturauslass bzw. der Ventilauslass einen Strahlregler aufweist, so wie dies vorstehend im Hinblick auf die Ventilvorrichtung bereits beschrieben wurde.

In Weiterbildung der Armatur ist vorgesehen, dass der Ventilauslauf mit dem Armaturauslass verbunden ist und der Spülauslauf mit einer Rückführung zur Verbindung mit einem Siphon verbunden ist. Über den Spülauslauf kann somit das Wasser beispielsweise am Waschbecken vorbei direkt in den unter dem Waschbecken angeordneten Siphon fließen. Die entsprechende Rückführung dient somit im Grunde als Überbrückung des Waschbeckens.

Weiterhin hat es sich als vorteilhaft herausgestellt, wenn die Armatur eine Mischbatterie aufweist, die der Ventilvorrichtung vorgeschaltet ist. Die Mischbatterie kann zwei Eingänge, und zwar einmal für heißes Wasser und einmal für kaltes Wasser aufweisen sowie einen Ausgang für Wasser in einer gewünschten Temperatur. In der Mischbatterie kann durch Mischung von heißem und kaltem Wasser ein Wasserstrom in einer gewünschten Temperatur erzeugt werden, der dann in den Einlaufkanal der Ventilvorrichtung einströmen kann.

In Weiterbildung der Armatur hat es sich als vorteilhaft herausgestellt, wenn diese eine Sensorik zur Überwachung des Nahbereichs der Armatur aufweist. Es ist möglich, dass bspw. nach einer Stagnationsspülung eine thermische Desinfektionsspülung über den Ventilauslauf durchgeführt wird, um bspw. auch Keime zwischen Entnahmeventil und Armaturauslass zu beseitigen bzw. diesen bei einer Stagnationsspülung nicht durchspülten Bereich thermisch zu desinfizieren. Da eine solche thermische Desinfektionsspülung ein gewissen Verbrühungsrisiko nach sich zieht, da das heiße Wasser aus dem Armaturauslass austritt, kann über die Sensorik erkannt werden, ob sich bspw. eine Hand im Nahbereich der Armatur befindet und insofern einer Verbrühung bei einer thermischen Desinfektionsspülung ausgesetzt sein könnte.

Weitere Einzelheiten und Vorteile der Erfindung sollen nachfolgend anhand der beigefügten Zeichnungen erläutert werden. Darin zeigen:
- Fig. 1: eine schematische Schnittansicht durch eine Ventilvorrichtung;
- Fig. 2: eine Schnittansicht durch das Ventilgehäuse gemäß der Darstellung der Fig. 1;
- Fig. 3: eine Schnittansicht durch die Ventilvorrichtung mit zwei Leitungsanschlüssen sowie mit einer dargestellten Schnittstelle;
- Fig. 4: eine Querschnittsansicht der Ventilvorrichtung gemäß der Darstellung der Fig. 1;
- Fig. 5a: eine Schnittansicht durch eine Armatur mit einer Ventilvorrichtung;
- Fig. 5b: die Armatur gemäß Fig. 5a in einer perspektivischen Seitenansicht;
- Fig. 6a, 6b: verschiedene Ansichten eines in einer Armaturarm angeordneten Ventilvorrichtung; und
- Fig. 7: eine schematische Ansicht einer Verwendung einer Armatur mit einer Ventilvorrichtung an einem Waschtisch.

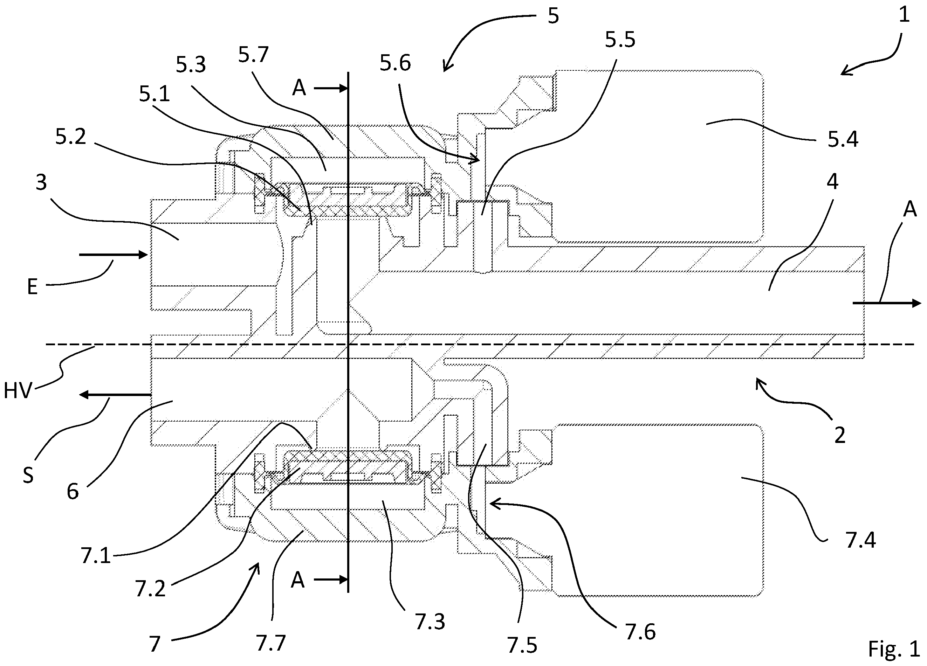

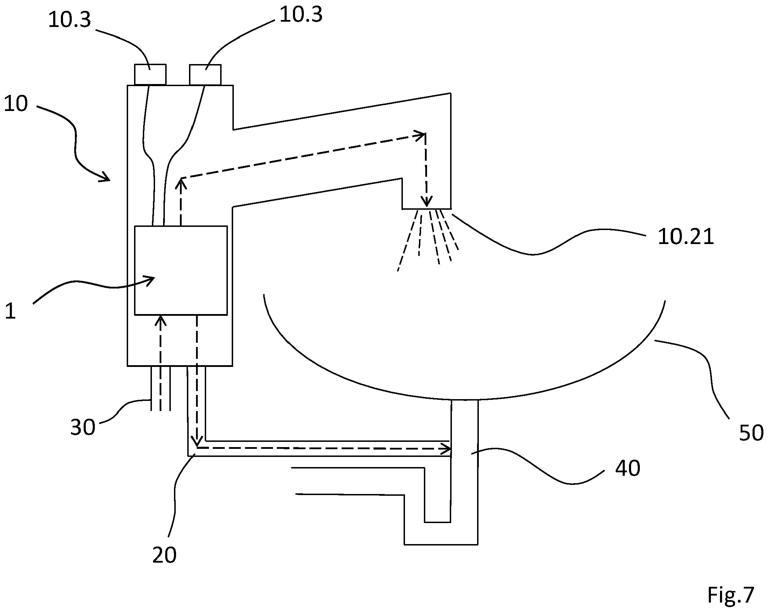

In der Darstellung der Fig. 1 ist eine Ventilvorrichtung 1 zum Einsatz in einer Armatur 10 in einer Schnittansicht dargestellt. Bevor nachfolgend auf die Ausgestaltung der Ventilvorrichtung 1 an sich noch näher eingegangen wird, soll zunächst die grundlegende Funktionsweise der Ventilvorrichtung 1 anhand der Fig. 7 näher erläutert werden. Die Fig. 7 zeigt in einer vereinfachten schematischen Ansicht ein Waschbecken 50 mit einer als Wasserhahn ausgestalteten Armatur 10. Um an der Armatur 10 Wasser zu entnehmen, kann einer der beiden Betätigungselemente 10.3 betätigt werden, wodurch dann der Strömungsweg von der Zuführleitung 30 durch die Ventilvorrichtung 1 bis zum Armaturauslass 10.21 freigegeben wird, so dass das Wasser aus der Armatur 10 in das Waschbecken 50 fließen kann. Unten am Waschbecken 50 befindet sich ein Ablauf, der mit einem Siphon 40 verbunden ist und über den das Wasser als Abwasser abgeführt werden kann.

Bei längerer Standzeit von Wasser in der Zuführleitung 30 kann es mitunter zur Bildung von Keimen kommen, weshalb dieses Wasser dann nicht als Nutzwasser verwendet werden kann. Die Ventilvorrichtung 1 weist daher zwei verschiedene Ausläufe auf, nämlich einen Ventilauslauf 4 an der Oberseite, von dem aus das Nutzwasser zum Armaturauslass 10.21 geleitet werden kann und einen zweiten als Spülauslauf 6 ausgestalteten Auslauf, der auf der gegenüberliegenden Seite der Ventilvorrichtung 1 angeordnet ist. Von dem Spülauslauf 6 kann das abgestandene und ggf. mit Keinem verunreinigte Wasser über die Rückführung 20 direkt in den Ablauf des Waschbeckens 50 bzw. direkt in den Siphon 40 geleitet werden. Nach längerer Standzeit kann somit zunächst eine entsprechende Stagnationsspülung durchgeführt werden, bevor dann Nutzwasser am Armaturauslass 10.21 entnommen werden kann.

Zur Stagnationsspülung wird eines der beiden Betätigungselemente 10.3 betätigt, wodurch das Wasser von der Zuführleitung 30 in die Rückführung 20 und nicht zum Armaturauslass 10.21 geleitet wird. Nach der Stagnationsspülung, wenn das abgestandene Wasser abgelaufen und die Leitung insofern mit Frischwasser durchgespült ist, kann der Wasserfluss dann von der Rückführung zum Armaturauslass umgeschaltet werden.

Der genaue Aufbau der Ventilvorrichtung 1 soll nun nachfolgend anhand der weiteren Figuren näher erläutert werden. Wie dies in der Darstellung der Fig. 1 zu erkennen ist, weist die Ventilvorrichtung 1 einen Ventileinlauf 3, einen Ventilauslauf 4 für Nutzwasser und einen Spülauslauf 6 für eine Stagnationsspülung auf. Das in Einstömrichtung E in die Ventilvorrichtung 1 einströmende Wasser kann entweder die Ventilvorrichtung 1 durchströmen und in Ausströmrichtung A aus dem Ventilauslauf 4 austreten oder es kann zur Stagnationsspülung um 180 Grad umgelegt und dann in entgegengesetzter Spülrichtung S über den Spülauslauf 6 die Ventilvorrichtung 1 wieder verlassen und zu einem Abfluss geleitet werden. Um das Wasser entsprechend wahlweise durch den Ventilauslauf 4 oder den Spülauslauf 6 zu leiten, sind zwei unabhängig voneinander betätigbare Ventile 5, 7 vorgesehen. Das Ventil 5 ist dabei als Entnahmeventil 5 ausgestaltet und dieses kann den Flussweg vom Ventileinlauf 3 zum Ventilauslauf 4 freigeben oder blockieren. In analoger Weise kann das Spülventil 7 den Durchfluss von Ventileinlauf 3 zum Spülauslauf 6 regeln.

Wie dies vorstehend bereits beschrieben wurde, wird nach längerer Standzeit zunächst eine Stagnationsspülung durchgeführt, wofür das Spülventil 7 für eine gewisse Zeit geöffnet wird, so dass das abgestandene Wasser abfließen kann. Danach wird das Spülventil 7 geschlossen und das Entnahmeventil 5 geöffnet, so dass das Wasser als Nutzwasser zum Armaturauslass 10.21 fließen kann, der an den Ventilauslauf 4 angeschlossen ist.

Wie dies in der Darstellung der Fig. 1 ferner zu erkennen ist, sind sowohl das Entnahmeventil 5 als auch das Spülventil 7 als eigenmediumbetätigbare Ventile ausgestaltet, so dass die erforderlichen Betätigungskräfte, um die Ventile 5, 7 zu öffnen oder zu schließen, vergleichsweise gering sind. Im geschlossenen Zustand, der in der Fig. 1 dargestellt sind, liegt in den beiden Druckräumen 5.3, 7.3 der Ventile 5,7 jeweils derselbe Druck wie im Ventileinlauf 3 an. Dies geht damit einher, dass die Membranen 5.2, 7.2 der Ventile 5, 7 jeweils abseits der Ventilsitze 5.1, 7.1 eine kanalförmige Öffnung aufweisen und somit die Druckräume 5.3, 7.3 mit dem Ventileinlass E verbunden sind. Dieser Druck ist ausreichend, um die jeweilige Membran 5.2, 7.2 auf den jeweiligen Ventilsitz 5.1, 5.2 zu drücken und somit die Flusswege zuverlässig zu verschließen.

Um die Ventile 5, 7 zu öffnen, müssen die zugehörigen Pilotventile 5.6, 7.6 betätigt werden. Diese weisen jeweils ein Pilotventilschließelement 5.62, 7.62 auf, die in der geschlossenen Stellung auf einem Pilotventilsitz 5.61, 7.61 aufliegen und somit die jeweiligen Vorsteuerkanäle 5.5, 7.5 verschließen, die im Ventilauslauf 4 bzw. im Spülauslauf 6 enden. Wenn die Pilotschließelemente 5.62, 7.62 in eine geöffnete Stellung bewegt werden, in der sie nicht auf den entsprechenden Pilotventilsitzen 5.61, 7.61 aufliegen, sind entsprechend auch die Vorsteuerkanäle 5.5, 5.7 freigegeben. Da die Druckräume 5.3, 7.3 über die Vorsteuerkanäle 5.5, 7.5 mit den jeweiligen Ausläufen 4, 6 verbunden sind, strömt bei einem geöffneten Vorsteuerkanal 5.5, 7.5 das sich in der Druckkammer 5.3, 7.3 befindliche Wasser in den entsprechenden Auslauf 4, 6.

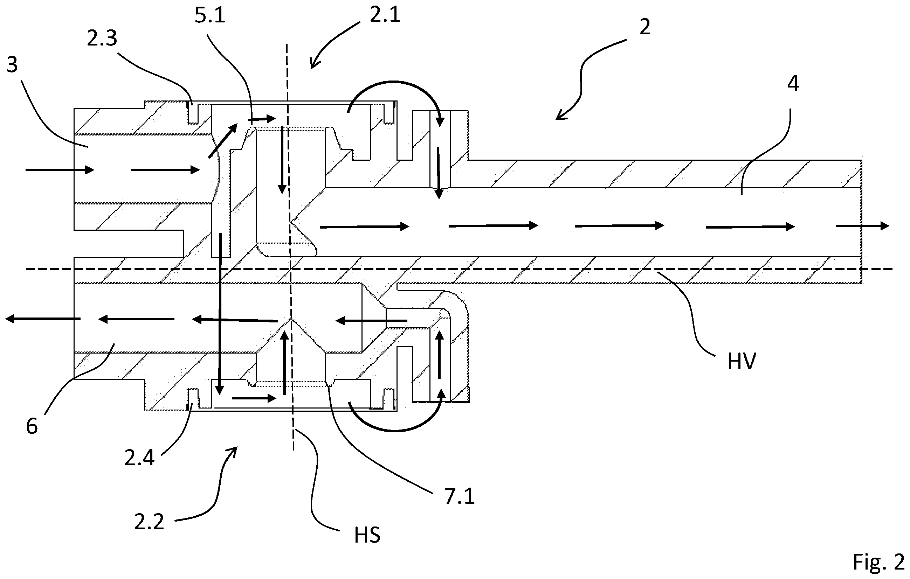

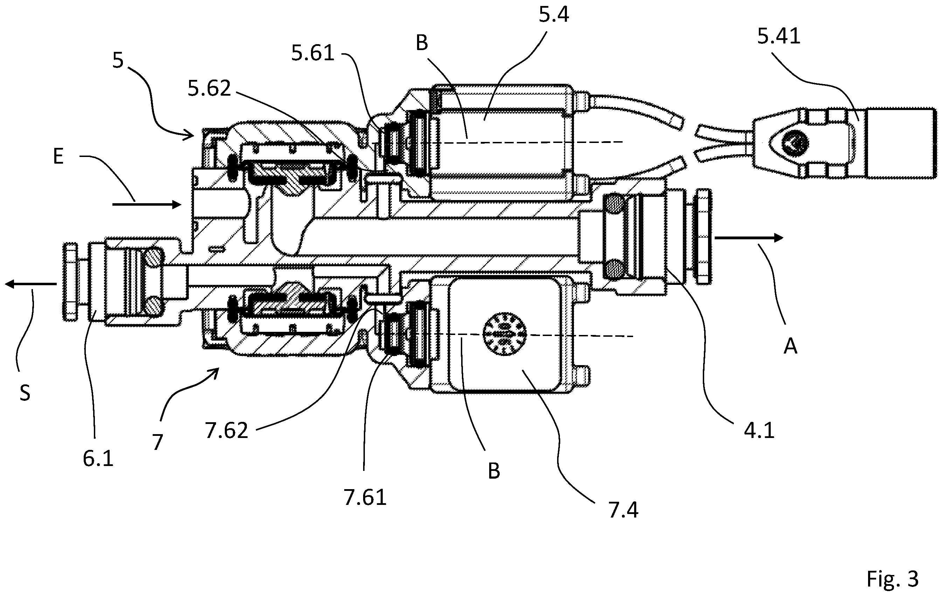

Wird bspw. das Pilotventil 5.6 des Entnahmeventils 5 geöffnet, führt dies aufgrund des durch den Vorsteuerkanal 5.5 strömenden Wassers zu einem Druckabfall in der Druckkammer 5.3 oberhalb der Membrane 5.2. Das von unten aus dem Ventileinlauf 3 gegen die Membrane 5.2 drückende Wasser hat dann einen ausreichende Druckkraft, um die Membrane 5.2 in die Druckkammer 5.3 hineinzubewegen und diese so vom Ventilsitz 5.1 abzuheben. Das Wasser kann dann durch das Entnahmeventil 5 zum Ventilauslass 4 strömen. Zum Schließen des Entnahmeventils 5 wird zunächst wieder der Vorsteuerkanal 5.5 über das das Pilotventil 5.6 verschlossen, was zu einer Druckerhöhung in der Druckkammer 5.3 und damit zu einem Absinken der Membrane 5.2 führt, bis diese wieder auf dem Ventilsitz 5.1 aufliegt und der Flussweg blockiert ist. Um das Ventil 5 somit zu öffnen und zu schlie-ßen, muss lediglich das kleine Pilotventil 5.6 bzw. das kleine Pilotventilschließelement 5.62 bewegt werden. In der Darstellung der Fig. 1 sind das Pilotschließelement 5.62, 7.62 und der Pilotventilsitz 5.61, 7.61 nicht klar zu erkennen, jedoch sind diese Elemente in der Fig. 3 gezeigt. Da das Öffnen und das Schließen der beiden Ventile 5, 7 entsprechend identisch abläuft, wird im Hinblick auf die Funktionsweise des Spülventils 7 auf die Beschreibung des Entnahmeventils 5 verwiesen. Anhand der Fig. 2 sind auch die verschiedenen Flusswege des Wassers noch einmal zu erkennen. Die eigentlichen Ventile 5, 7 sind dabei nicht dargestellt, sondern es ist nur das als Grundkörper der Ventilvorrichtung 1 fungierende und einstückig ausgestaltete Ventilgehäuse 2 zu erkennen, wobei der Ventileinlauf 3 sowie die beiden Ausläufe 4, 6 Teil des Ventilgehäuses 2 sind.

Das Ventilgehäuse 2 weist eine Hauptventilachse HV auf, in deren Richtung sich auch das Wasser bei einem normalen Betrieb durch der Ventilvorrichtung 1 vom Einströmkanal 3 zum Ausströmkanal 4 strömt. Die Einstömrichtung E und die Ausströmrichtung A verlaufen insoweit auch in derselben Richtung und parallel zur Hauptventilachse HV. Die beiden Ventile 5, 7 bzw. die jeweiligen Membranen 5.2, 7.2 der beiden Ventile 5, 7 bewegen sich beim Öffnen und Schließen hingegen senkrecht zu der Hauptventilachse HV und in Richtung einer Hauptschaltasche HS. Daraus folgt auch, dass das Wasser beim Passieren der Ventile 5, 7 umgelenkt wird. Beim Entnahmeventil 5 anhand der Fig. 3 bspw. zunächst um ca. 90 Grad nach links, dann um 180 Grad und anschließend um 90 Grad nach rechts in den Auslaufkanal 4. Das Wasser durchströmt die Ventile 5, 7 bzw. die entsprechenden Ventilsitze 5.1, 7.1 daher in Richtung der Hauptschaltachse HS und senkrecht zur Hauptventilachse HV bzw. entsprechend senkrecht zur Einströmrichtung E. Auch die Vorsteuerkanäle 5.5, 7.5 erstrecken sich senkrecht zur Hauptventilachse HV und parallel zur Hauptschaltasche HS.

Zur Verbindung des Entnahmeventils 5 und des Spülventils 7 mit dem Ventilgehäuse 2 können diese von gegenüberliegenden Seiten auf das Ventilgehäuse 2 aufgesteckt und dann bspw. über eine Schraubverbindung mit diesem verbunden werden. Das Ventilgehäuse 2 fungiert somit als Grundkörper, an dem die beiden Ventile 5, 7 angeordnet werden können. Neben den Einlauf- und Auslaufkanälen 3, 4, 6 und den Ventilsitzen 5.1, 7.1 weist das Ventilgehäuse 2 zudem auch eine nutenförmige Membranaufnahme 2.3, 2.4 auf, die in der Fig. 2 zu erkennen ist und die sich kreisförmig und konzentrisch um den jeweiligen Ventilsitz 5.1, 7.1 erstreckt. Bei der Verbindung der Ventile 5, 7 mit dem Ventilgehäuse 2 fungieren diese Membranaufnahmen 2.3, 2.4 als Aufnahmen bzw. als Halterungen für die Membranen 5.2, 7.2.

Wie in der Fig. 1 dargestellt, bestehen die Ventile 5, 7 im Wesentlichen aus einem Ventildeckel 5.7, 7.7, an der die jeweilige Membrane 5.2, 7.2 befestigt ist. Auch die Ventildeckel 5.7, 7.7 weisen kreis- und nutenförmige Membranaufnahmen auf, die derart angeordnet sind, dass diese im montierten Zustand mit den im Ventilgehäuse 2 angeordneten Membranaufnahmen 2.3, 2.4 fluchten. Die Membranen 5.2, 7.2 bzw. der entsprechende Randbereich der Membranen 5.2, 7.2 ist somit zwischen dem entsprechenden Ventildeckel 5.2, 7.2 und dem Ventilgehäuse 2 bzw. den nutenförmigen Aufnahmen eingeklemmt. Der Randbereich der Membranen 5.2, 7.2 ist dabei nach Art einer Dichtlippe gegenüber dem mittleren Bereich der Membran verdickt und erstreckt sich senkrecht zur Hauptventilachse HS. Dieser eingeklemmte bzw. eingespannte Randbereich dient somit nicht zur Positionierung und Fixierung der jeweiligen Membrane 5.2, 7.2, sondern er fungiert auch als Dichtung, so dass Wasser nicht zwischen dem Ventilgehäuse 2 und dem jeweiligen Ventildeckel 5.7, 7.7 austreten kann.

So wie dies in der Fig. 1 zu erkennen ist, sind die Membranen 5.2, 7.2 im mittleren Bereich, die in der geschlossenen Stellung auf den jeweiligen Ventilsitzen 5.1, 7.1 aufliegt, verstärkt, so dass sich die Membranen 5.2, 7.2 aufgrund des wirkenden Wasserdrucks nicht verformen können und eine ausreichende Dichtigkeit gewährleistet wird. Zwischen dem mittleren Bereich und dem eingespannten Randbereich sind die Membranen 5.2, 7.2 jedoch flexibel, so dass Öffnungs- und Schließbewegungen zuverlässig durchgeführt werden können. Die Membranen 5.1, 7.1 bzw. die entsprechenden mittleren Bereiche bewegen sich bei einer entsprechenden Bewegung in Richtung der Hautschaltachse HS und damit senkrecht zu der Einströmrichtung E.

Damit die Ventilvorrichtung 1 in einer Armatur 10 eingebaut werden kann, muss dieses möglichst kompakt ausgeführt sein. Ein wichtiger Konstruktionsaspekt ist daher, dass das Entnahmeventil 5 und das Spülventil 7 auf gegenüberliegenden Seiten des Ventilgehäuses 2 angeordnet und sehr flachbauend ausgestaltet sind. Demnach erstrecken sich auch die Membranen 5.2, 7.2 parallel zur Hautventilachse HV. Entsprechendes gilt auch für die beiden Steuereinheiten 5.4, 7.4, über die die Pilotventilschließelemente 5.62, 7.62 in Richtung der parallel zur Hauptventilachse HS angeordneten Betätigungsachsen B hin und her bewegt werden können, so wie dies in der Fig. 3 dargestellt ist. Die Steuereinheiten 5.4, 7.4 weisen zur Betätigung der Pilotschließventile 5.62, 7.62 jeweils eine Spule mit mehreren Wicklungen auf, so dass die Pilotventilschließelemente 5.62, 7.62 magnetisch und damit berührungslos bewegt werden können. Dadurch, dass sich die Steuereinheiten 5.4, 7.4 sowie auch die jeweiligen Spulen in Richtung der Hauptventilachse HV erstrechen, können diese insgesamt sehr nah an dem Ventilgehäuse 2 angeordnet werden, was zu insgesamt zu einer recht schmalen Ventilvorrichtung 1 führt, so wie dies in der Fig. 3 zu erkennen ist.

In der Fig. 3 ist ferner eine mit der Steuereinheit 5.4 verbundene Schnittstelle 5.41 dargestellt, über die die Steuereinheit 5.4 bzw. die entsprechende Spule angesteuert werden kann. So wie dies auch in der schematischen Ansicht der Fig. 7 zu erkennen ist, kann diese Schnittstelle 5.41 bspw. mit einem Betätigungselement 10.3 verbunden sein, so dass über das Betätigungselement 10.3 dann das Pilotventilschließelement 5.62 bewegt und damit entsprechend der Flussweg vom Einlaufkanal 3 zum Auslaufkanal 4 freigegeben oder abgesperrt werden kann. Wenngleich dies in der Fig. 3 nicht mit dargestellt ist, weist auch die Steuereinheit 7.4 des Spülventils eine entsprechende Schnittstelle auf, die mit einem Betätigungselement 10.3 zum Öffnen und Schließen des Spülventils 7 verbunden ist. Die beiden Ventile 5, 7 bzw. die entsprechenden Steuereinheiten 5.4, 7.4 und Schnittstellen sind insoweit baugleich ausgestaltet.

Weiterhin sind in der Fig. 3 Leitungsanschlüsse 4.1, 6.1 dargestellt, die eine einfache Verbindung der jeweiligen Ausläufe 4, 6 mit entsprechenden Leitungen ermöglichen. Die Leitungsanschlüsse 4.1, 6.1 sind in die Enden der Ausläufe 4, 6 eingeschraubt und mit einer O-Ring-Dichtung versehen. Bei der Montage der Ventilvorrichtung 1 können somit die Leitungen einfach in die entsprechenden Leitungsanschlüsse 4.1, 6.1 eingesteckt werden. Wenngleich der Ventileinlauf 3 gemäß der Darstellung in Fig. 3 nicht mit einem Leitungsanschluss ausgestattet ist, kann jedoch auch dieser einen entsprechenden Leitungsanschluss aufweisen.

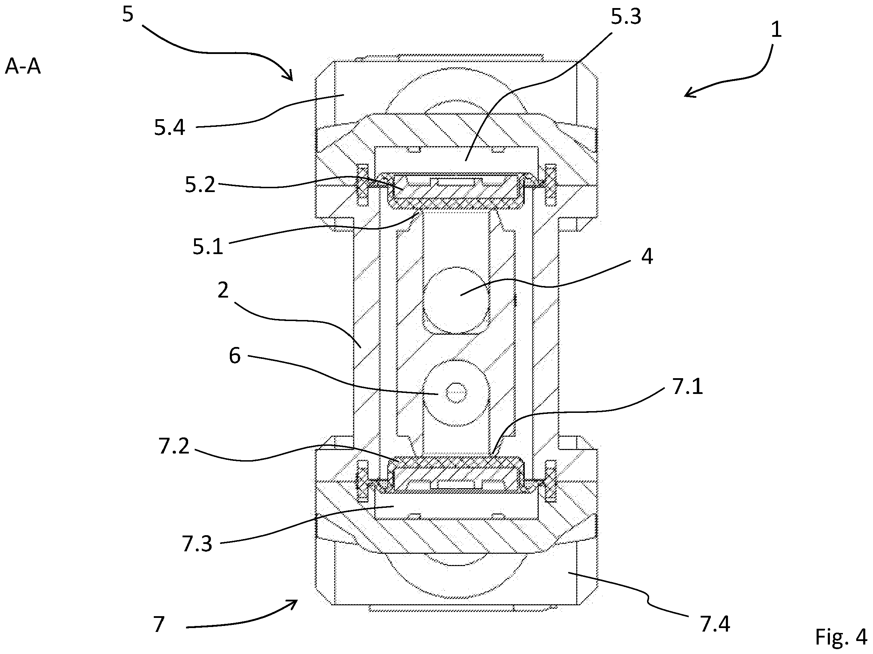

In der Darstellung der Fig. 4 ist die Ventilvorrichtung 1 in einer Schnittansicht gezeigt, die vertikal durch die Ventilvorrichtung 1 verläuft, so wie dies anhand der A-A-Linie in der Fig. 1 ersichtlich wird. Es ist in der Mitte das Ventilgehäuse 2 zu erkennen sowie auch die in der Fig. 1 aufgrund des Schnittes nicht mit dargestellten Verbindungskanäle vom Ventileinlass 3 zur Membrane 7.2 des Spülventils 7, von wo aus das Wasser dann durch die Membrane 7.2 in die Druckkammer 7.3 fließen kann. Auch ist die kompakte Bauweise aufgrund der in Einströmrichtung E bzw. in Richtung der Hauptventilachse HV und direkt neben dem Ventilgehäuse 2 angeordneten Steuereinheiten 5.4, 7.4 gut zu erkennen.

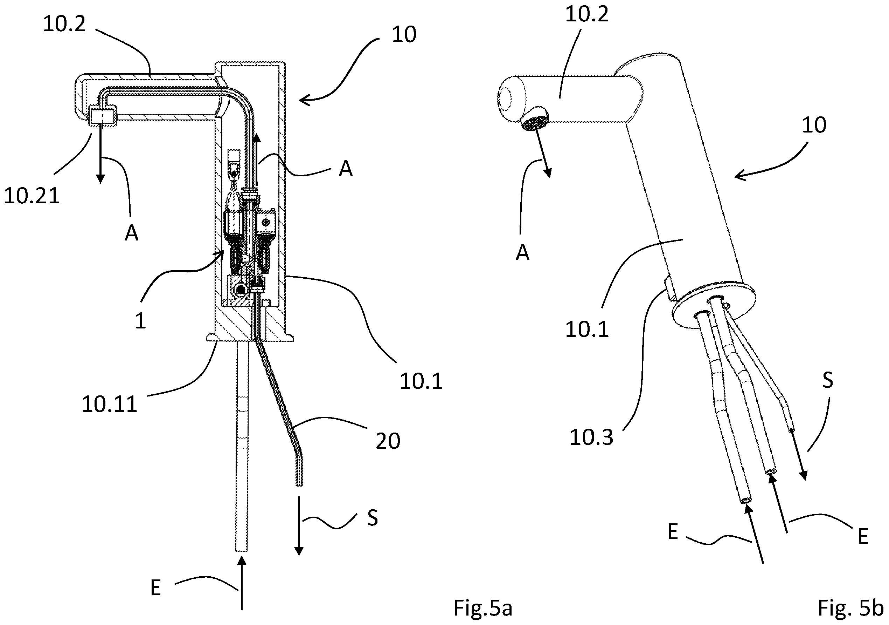

In den Fig. 5a und 5b ist eine Einbausituation der Ventilvorrichtung 1 in einer als Waschtischarmatur ausgestalteten Armatur 10 gezeigt. Die Armatur 10 besteht im Wesentlichen aus zwei Teilen, nämlich einem Armaturkörper 10.1 mit einem Montagebereich 10.11, über den die Armatur 10 bspw. auf einem Waschbecken 50 montiert werden kann und einem winkelig zu dem Armaturkörper 10.1 angeordneten Armaturarm 10.2, aus dem das Nutzwasser nach unten herausfließen kann, so wie man dies von handelsüblichen Wasserhähnen kennt. Zur Entnahme von Nutzwasser aus der Armatur 10 wird diese von unten angeströmt und das Wasser tritt von unten durch den Montagebereich 10.11 in die Ventilvorrichtung 1 bzw. in den Ventileinlauf 3 ein und verlässt dieses am oberen Ende wieder durch den Ventilauslauf 4 in Ausströmrichtung A. In der Armatur 10 wird das Wasser nach der Ventilvorrichtung 1 umgelenkt und fließt dann nach unten aus dem Armaturauslass 10.21 heraus.

Wie dies weiterhin zu erkennen ist, ist die Ventilvorrichtung 1 im Armaturkörper 10.1 positioniert und derart angeordnet, dass sich die Hauptventilachse HV in vertikaler Richtung und damit auch in Längsrichtung zum Armaturkörper 10.1 erstreckt. Nur aufgrund der Positionierung der Steuereinheiten 5.4, 7.4 neben dem Ventilgehäuse 2 und in Richtung der Hauptventilachse HV findet die Ventilvorrichtung 1 im Armaturkörper 10.1 ausreichend Platz.

So wie dies in der Fig. 5b zu erkennen ist, sind zwei separate Zuführleitungen vorgesehen, wobei in einer der Leitungen kaltes Wasser und in der anderen heißes Wasser zugeführt wird. Der Ventilvorrichtung 1 kann insofern auch eine Mischbatterie vorgeschaltet sein, die die heißen und kalten Ströme entsprechend mischt und mit der so eine gewünschte Temperatur eingestellt werden kann. Zur Stagnationsspülung wird das Wasser in der Ventilvorrichtung 1 umgelenkt und verlässt dieses dann über den Spülauslauf 6. Das Entnahmeventil 5 ist dabei geschlossen und das Spülventil 7 geöffnet, so wie dies vorstehend bereits beschrieben wurde. Der Spülauslauf 6 ist mit einer Rückführung 20 verbunden, die, wie in Fig. 7 dargestellt, im Ablauf des Waschbeckens 50 enden kann.

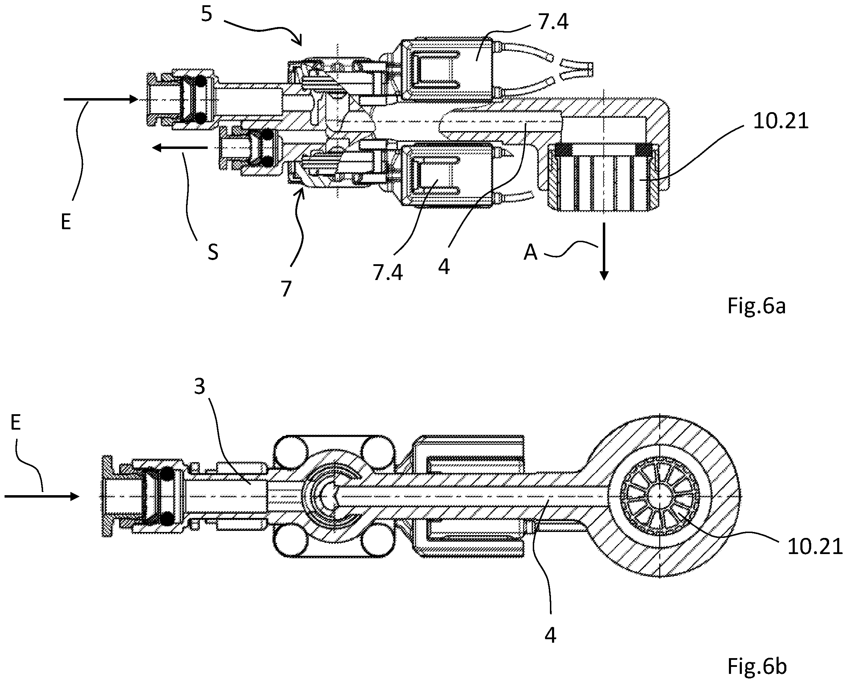

In der Darstellung der Fig. 6a und 6b ist eine alternative Ausgestaltung der Ventilvorrichtung 1 gezeigt, die jedoch in weiten Teilen auch mit der vorstehenden Ausgestaltung übereinstimmt, so dass insofern auf die obenstehende Beschreibung verwiesen wird. Der wesentliche Unterschied besteht darin, dass die Ventilvorrichtung 1 dazu geeignet ist, direkt im Armaturarm 10.2 und damit unmittelbar vor dem Austrittspunkt des Wassers angeordnet zu werden. Der Ventilauslauf 4 weist bei dieser Ausgestaltung eine Abwinklung auf und der als Strahlregler ausgestaltete Armaturauslass 10.21 ist direkt in den Ventilauslauf 4 integriert. Es ist insofern nicht erforderlich, den Ventilauslauf 4 mit dem Armaturauslass 10.21 zu verbinden, wie dies in den Fig. 5a und 5b dargestellt ist, sondern es ist vielmehr so, dass das Ende des Ventilauslaufs 4 selbst einen Teil der Armatur 10 darstellt.

Diese Ausgestaltung bietet den Vorteil, dass bei einer Stagnationsspülung möglichst das gesamte Wasser vor dem Armaturauslass 10.21 ausgetauscht werden kann, wohingegen bei der Anordnung der Ventilvorrichtung 1 im Armaturkörper 10.1 die Leitung zwischen Ventilvorrichtung 1 bzw. Spülventil 7 und Armaturauslass 10.21 vergleichsweise lang ist und sich dort ggf. Keime und Ablagerungen bilden können. Auf der anderen Seite muss dann jedoch der Ventilarm 10.2 eine ausreichende Größe zur Aufnahme der Ventilvorrichtung 1 aufweisen.

### Bezugszeichen:

- 1: Ventilvorrichtung
- 2: Ventilgehäuse
- 2.1: Montagestelle
- 2.2: Montagestelle
- 2.3: Membranaufnahme
- 2.4: Membranaufnahme
- 3: Ventileinlauf
- 4: Ventilauslauf
- 4.1: Leitungsanschluss
- 5: Entnahmeventil
- 5.1: Ventilsitz
- 5.2: Membrane
- 5.3: Druckkammer
- 5.4: Steuereinheit
- 5.41: Schnittstelle
- 5.5: Vorsteuerkanal
- 5.6: Pilotventil
- 5.61: Pilotventilsitz
- 5.62: Pilotventilschließelement
- 5.7: Ventildeckel
- 6: Spülauslauf
- 6.1: Leitungsanschluss
- 7: Spülventil
- 7.1: Ventilsitz
- 7.2: Membrane
- 7.3: Druckkammer
- 7.4: Steuereinheit
- 7.5: Vorsteuerkanal
- 7.6: Pilotventil
- 7.61: Pilotventilsitz
- 7.62: Pilotventilschließelement
- 7.7: Ventildeckel
- 10: Armatur
- 10.1: Armaturkörper
- 10.11: Montagebereich
- 10.2: Armaturarm
- 10.21: Armaturauslass
- 10.3: Betätigungselement
- 20: Rückführung
- 30: Zuführleitung
- 40: Siphon
- 50: Waschbecken

- A: Ausströmrichtung
- B: Betätigungsachse
- E: Einströmrichtung
- HV: Hauptventilachse
- HS: Hauptschaltachse
- S: Spülrichtung

## Patentansprüche

1. Ventilvorrichtung zum Einsatz in einer Armatur (10) mit einem in einer Einströmrichtung (E) durchströmbaren Ventileinlauf (3), einem in einer Ausströmrichtung (A) durchströmbaren Ventilauslauf (4) zur Entnahme von Nutzwasser und einem im Flussweg zwischen dem Ventileinlauf (3) und dem Ventilauslauf (4) angeordneten eigenmediumbetätigbaren Entnahmeventil (5) zur Freigabe des Flusswegs, mit einem in einer Spülrichtung (S) durchströmbaren Spülauslauf (6), wobei im Flussweg zwischen dem Ventileinlauf (3) und dem Spülauslauf (6) ein Spülventil (7) zur Freigabe des Flusswegs angeordnet ist, **dadurch gekennzeichnet,**
**dass** die Einströmrichtung (E) und die Spülrichtung (S) einander entgegengesetzt angeordnet sind.

2. Ventilvorrichtung nach Anspruch 1, **gekennzeichnet durch** ein Ventilgehäuse (2), welches den Ventileinlauf (3), den Ventilauslauf (4) und den Spülauslauf (6) aufweist.

3. Ventilvorrichtung nach Anspruch 2, **dadurch gekennzeichnet, dass** das Ventilgehäuse (2) einen ersten Ventilsitz (5.1) für das Entnahmeventil (5) und einen zweiten Ventilsitz (7.1) für das Spülventil (7) aufweist.

4. Ventilvorrichtung nach einem der vorhergehenden Ansprüche,
**dadurch gekennzeichnet, dass** das Spülventil (7) als eigenmediumbetätigbares Ventil ausgestaltet ist.

5. Ventilvorrichtung nach einem der Ansprüche 2 bis 4, **dadurch gekennzeichnet, dass** das Entnahmeventil (5) und das Spülventil (7) lösbar mit dem Ventilgehäuse (2) verbunden sind.

6. Ventilvorrichtung nach einem der vorhergehenden Ansprüche, **dadurch gekennzeichnet, dass** das Spülventil (7) über eine Magnetbetätigung betätigbar ist.

7. Ventilvorrichtung nach einem der Ansprüche 2 bis 6, **dadurch gekennzeichnet, dass** das Ventilgehäuse (2) für jede Membrane (5.2, 7.2) eine nutenförmige Membranaufnahme (2.3, 2.4) aufweist, in der die jeweilige Membrane (5.2, 7.2) aufgenommen werden kann.

8. Ventilvorrichtung nach einem der vorhergehenden Ansprüche,
**dadurch gekennzeichnet, dass** das Entnahmeventil (5) und/oder das Spülventil (7) einen Ventildeckel (5.7, 7.7) aufweisen und eine jeweilige Membrane (5.2, 7.2) zwischen dem Ventildeckel (5.7, 7.7) und dem Ventilgehäuse (2) eingespannt ist.

9. Ventilvorrichtung nach einem der vorhergehenden Ansprüche,
**dadurch gekennzeichnet, dass** der Ventileinlauf (3) und der Ventilauslauf (4) auf gegenüberliegenden Seiten angeordnet sind.

10. Ventilvorrichtung nach einem der vorhergehenden Ansprüche, **gekennzeichnet durch** eine parallel zu der Einströmrichtung (E) und/oder der Ausströmrichtung (A) angeordnete Hauptventilachse (HV), wobei sich das Entnahmeventil (5) und das Spülventil (7) in Bezug zu der Hauptventilachse (HV) gegenüberliegen.

11. Ventilvorrichtung nach Anspruch 10, **dadurch gekennzeichnet, dass** sich die Membrane (5.2, 7.2) des Entnahmeventils (5) und/oder des Spülventils (7) beim Öffnen und beim Schließen senkrecht zur Hauptventilachse (HV) bewegen.

12. Armatur, insbesondere Waschtischarmatur, mit einer Ventilvorrichtung (1) nach einem der Ansprüche 1 bis 11.

13. Armatur nach Anspruch 12, **gekennzeichnet durch** einen Armaturauslass (10.21) aufweisenden Armaturarm (10.2), wobei die Ventilvorrichtung (1) im Armaturarm (10.2) angeordnet ist.

14. Armatur nach einem der Ansprüche 12 oder 13, **dadurch gekennzeichnet, dass** der Ventilauslauf (4) mit einem Armaturauslass (10.21) verbunden ist und der Spülauslauf (6) mit einer Rückführung (20) zur Verbindung mit einem Siphon (30) verbunden ist.

## Claims

1. Valve device for use in a faucet (10) with a valve inlet (3) through which flow can take place in an inflow direction (E), a valve outlet (4) through which flow can take place in an outflow direction (A) for the withdrawal of process water and a withdrawal valve (5) which can be actuated by its own medium and is arranged in the flow path between the valve inlet (3) and the valve outlet (4) to release the flow path, with a flushing outlet (6) through which the medium can flow in a flushing direction (S), a flushing valve (7) being arranged in the flow path between the valve inlet (3) and the flushing outlet (6) to release the flow path,
**characterized**
**in that** the inflow direction (E) and the flushing direction (S) are arranged in opposite directions.

2. Valve device according to claim 1, **characterized by** a valve housing (2) the valve inlet (3), the valve outlet (4) and the flushing outlet (6).

3. Valve device according to claim 2, **characterized in that** the valve housing (2) has a first valve seat (5.1) for the extraction valve (5) and a second valve seat (7.1) for the flushing valve (7).

4. Valve device according to one of the preceding claims, **characterized in that** the flushing valve (7) is designed as an self-actuated valve.

5. Valve device according to one of claims 2 to 4, **characterized in that** the withdrawal valve (5) and the flush valve (7) are detachably connected to the valve housing (2).

6. Valve device according to one of the preceding claims, **characterized in that** the flush valve (7) can be actuated via a solenoid actuation.

7. Valve device according to one of claims 2 to 6, **characterized in that** the valve housing (2) has a groove-shaped diaphragm receptacle (2.3, 2.4) for each diaphragm (5.2, 7.2), in which the respective diaphragm (5.2, 7.2) can be accommodated.

8. Valve device according to one of the preceding claims, **characterized in that** the withdrawal valve (5) and/or the flushing valve (7) have a valve cover (5.7, 7.7) and a respective diaphragm (5.2, 7.2) is clamped between the valve cover (5.7, 7.7) and the valve housing (2).

9. Valve device according to one of the preceding claims, **characterized in that** the valve inlet (3) and the valve outlet (4) are arranged on opposite sides.

10. Valve device according to one of the preceding claims, **characterized by** a main valve axis (HV) arranged parallel to the inflow direction (E) and/or the outflow direction (A), wherein the withdrawal valve (5) and the flushing valve (7) are located opposite each other in relation to the main valve axis (HV).

11. Valve device according to claim 10, **characterized in that** the diaphragms (5.2, 7.2) of the withdrawal valve (5) and/or of the flushing valve (7) move perpendicular to the main valve axis (HV) during opening and closing.

12. Faucet, in particular washbasin faucet, with a valve device (1 ) according to one of claims 1 to 11.

13. Faucet according to claim 12, **characterized by** a faucet arm (10.2) having a faucet outlet (10.21), wherein the valve device (1) is arranged in the faucet arm (10.2).

14. Faucet according to one of claims 12 or 13, **characterized in that** the valve outlet (4) is connected to a faucet outlet (10.21) and the flushing outlet (6) is connected to a return (20) for connection to a siphon (30).

## Revendications

1. Dispositif de vanne destiné à être utilisé dans une robinetterie (10) avec une entrée de vanne (3) à travers laquelle le flux est apte à s'écouler selon une direction d'entrée (E), une sortie de vanne (4) à travers laquelle le flux est apte à s'écouler selon une direction de sortie (A) pour prélever de l'eau utile, et une vanne de prélèvement (5) apte à être actionnée par un fluide propre et agencée dans le trajet d'écoulement entre l'entrée de vanne (3) et la sortie de vanne (4) pour libérer le trajet d'écoulement, avec une sortie de rinçage (6) apte à être traversée dans une direction de rinçage (5), une vanne de rinçage (7) étant agencée dans le trajet du flux entre l'entrée de vanne (3) et la sortie de rinçage (6) pour libérer le trajet du flux, **caractérisé**
**en ce que** la direction d'entrée (E) et la direction de rinçage (S) sont agencées en sens inverse l'une de l'autre.

2. Dispositif de vanne selon la revendication 1, **caractérisé par** un corps de vanne (2) qui présente l'entrée de vanne (3), la sortie de vanne (4) et la sortie de rinçage (6).

3. Dispositif de vanne selon la revendication 2, **caractérisé en ce que** le corps de vanne (2) présente un premier siège de vanne (5.1) pour la vanne de prélèvement (5) et un deuxième siège de vanne (7.1) pour la vanne de rinçage (7).

4. Dispositif de vanne selon l'une des revendications précédentes, **caractérisé en ce que** la vanne de rinçage (7) est conçue comme une vanne apte à être actionnée par son propre fluide.

5. Dispositif de vanne selon l'une des revendications 2 à 4, **caractérisé en ce que** la vanne de prélèvement (5) et la vanne de rinçage (7) sont reliées de manière amovible au corps de vanne (2).

6. Dispositif de vanne selon l'une des revendications précédentes, **caractérisé en ce que** la' vanne de rinçage (7) est apte à être actionnée par un actionnement magnétique.

7. Dispositif de vanne selon l'une des revendications 2 à 6, **caractérisé en ce que** le corps de vanne (2) présente pour chaque membrane (5.2, 7.2) un logement de membrane en forme de rainure (2.3, 2.4) dans lequel la membrane respective (5.2, 7.2) est apte à être logée.

8. Dispositif de vanne selon l'une des revendications précédentes, **caractérisé en ce que** la vanne de prélèvement (5) et/ou la vanne de rinçage (7) présentent un couvercle de vanne (5.7, 7.7) et une membrane respective (5.2, 7.2) est serrée entre le couvercle de vanne (5.7, 7.7) et le boîtier de vanne (2).

9. Dispositif de vanne selon l'une des revendications précédentes, **caractérisé en ce que** l'entrée de vanne (3) et la sortie de vanne (4) sont agencées sur des côtés opposés.

10. Dispositif de vanne selon l'une des revendications précédentes, **caractérisé par** un axe de vanne principal (HV) agencé parallèlement à la direction d'entrée (E) et/ou à la direction de sortie (A), la vanne de prélèvement (5) et la vanne de rinçage (7) étant opposées par rapport à l'axe de vanne principal (HV).

11. Dispositif de vanne selon la revendication 10, **caractérisé en ce que** la membrane (5.2, 7.2) de la vanne de prélèvement (5) et/ou de la vanne de rinçage (7) se déplacent perpendiculairement à l'axe de la vanne principale (HV) lors de l'ouverture et de la fermeture.

12. Robinetterie, en particulier robinetterie de lavabo, ayant un dispositif de vanne (1) selon l'une des revendications 1 à 11.

13. Robinetterie selon la revendication 12, **caractérisée par** un nez de robinetterie (10.2) présentant une sortie de robinetterie (10.21), le dispositif de vanne (1) étant agencé dans le nez de robinetterie (10.2).

14. Vanne selon l'une des revendications 12 ou 13, **caractérisée en ce que** la sortie de vanne (4) est reliée à une sortie de robinetterie (10.21) et la sortie de rinçage (6) est reliée à une conduite de retour (20) pour la liaison avec un siphon (30).
